# EUROPÄISCHE PATENTSCHRIFT

(11) **EP 3 165 674 B1**
(45) Veröffentlichungstag und Bekanntmachung des Hinweises auf die Patenterteilung: **04.07.2018**
(21) Anmeldenummer: 16195232.0
(22) Anmeldetag: 24.10.2016
(51) Int. Cl.: D21F 5/18, D21F 5/20

(54) **VORRICHTUNG UND VERFAHREN ZUR WÄRMERÜCKGEWINNUNG**
DEVICE AND METHOD FOR HEAT RECOVERY
DISPOSITIF ET PROCÉDÉ DE RÉCUPÉRATION DE CHALEUR

(30) Priorität: 03.11.2015 DE 102015221467; 19.02.2016 DE 102016202587
(43) Veröffentlichungstag der Anmeldung: 10.05.2017
(73) Patentinhaber: Voith Patent GmbH, 89522 Heidenheim (DE)
(72) Erfinder: Popp, Marco, 96260 Weismain (DE); Schlieckau, Torben, 94563 Bindlach (DE)

(56) Entgegenhaltungen:
- EP-A1- 2 078 911
- EP-A1- 2 396 469
- US-A1- 2005 132 598

## Beschreibung

Die Erfindung betrifft eine Vorrichtung und ein Verfahren zur Wärmerückgewinnung aus heißer Prozessabluft einer Anlage zur Herstellung einer Faserstoffbahn, insbesondere einer Tissue-Bahn, sowie eine Anlage zur Herstellung einer Faserstoffbahn, insbesondere einer Tissue-Bahn.

Bei der Herstellung von Tissue-Papier wird zur Trocknung des Papiers heiße Luft mit relativ hoher Geschwindigkeit auf das Papier geblasen. Das Wasser, das sich im Papier befindet, verdampft. Dadurch werden aus dem Trocknungsprozess mit dem Luftstrom auch Papierfasern gelöst. Diese landen unter anderem im Abluftsystem.

Die Energie dieser heißen Haubenabluft wird - wie beispielsweise in der EP2396469 beschrieben- durch verschiedene Wärmerückgewinnungsstufen zurückgewonnen.

Durch Papierfasern, die wie vorher beschrieben in die Haubenabluft gelangen, können die einzelnen Wärmerückgewinnungsstufen sehr schnell verschmutzen und verlieren dadurch an Wärmerückgewinnungsleistung oder müssen bis zur nächsten Wartung / Reinigung komplett mit dem Abluftstrom umfahren werden. Auch die EP 2 078 911 und US 2005/132598 zeigen solche Prozesse.

Klassische Filtersysteme würden bei hoher Faserfracht sehr schnell verstopfen und müssten ihrerseits häufig gewartet bzw. gereinigt werden. Ein solches klassisches Filtersystem, sowie die zur Reinigung notwendigen Maßnahmen ist beispielsweise in der DE 10 2015 202 398 beschrieben.

Für Anwendungen mit hoher Faserfracht in der Abluft erhöht sich der Wartungsaufwand solcher klassischer Filtersysteme jedoch sehr stark. Zudem kann im Extremfall bei einer unvorhergesehenen, vollständigen Verstopfung des Filtersystems sogar eine Abschaltung der gesamten Anlage notwendig werden, was für den Betreiber mit sehr hohen Kosten verbunden ist.

Aufgabe der vorliegenden Erfindung ist es daher, eine Vorrichtung und ein Verfahren anzugeben, das die Probleme des Standes der Technik überwindet.

Die Aufgabe wird vollständig gelöst durch ein Verfahren gemäß dem kennzeichnenden Teil des Anspruchs 1, sowie hinsichtlich der Vorrichtung durch eine Vorrichtung gemäß dem kennzeichnenden Teil des Anspruchs 9.

Das erfindungsgemäße Verfahren zur Wärmerückgewinnung aus heißer Prozessabluft einer Anlage zur Herstellung einer Faserstoffbahn, insbesondere einer Tissue-Bahn, ist dadurch gekennzeichnet, dass die Prozessabluft mittels zumindest eines Zyklonabscheiders zumindest teilweise von mitgeführten Partikeln, insbesondere Papierfasern, gereinigt wird, und danach zumindest einer ersten Wärmerückgewinnungsstufe, bevorzugt mehreren Wärmerückgewinnungsstufen zugeführt wird.

Durch dieses Verfahren können vor der ersten Wärmerückgewinnungsstufe, bzw. vor den Wärmerückgewinnungsstufen die Partikel, insbesondere Papierfasern, aus dem Luftstrom zuverlässig abgeschieden werden, auch wenn die Belastung der heißen Prozessabluft mit Partikeln, sehr hoch ist. Auf diese Weise kann die Wärmerückgewinnungsleistung konstant auf einem hohen Niveau gehalten werden. Außerdem können durch diese wirkungsvolle Reinigung der Prozessabluft die Wartungszyklen der Wärmerückgewinnungsstufen verlängert werden. Im Falle, dass die Abscheidung der Partikel im Zyklonabscheider ausreichend hoch ist, kann häufig die Reinigung der Wärmetauscher vollkommen entfallen kann.

Durch das erfindungsgemäße Verfahren können beispielsweise einige oder alle der folgenden Vorteile erzielt werden:
Der Leistungsverlust an den Wärmerückgewinnungsstufen wird minimiert, wodurch ein hoher Wirkungsgrad der Wärmerückgewinnung ermöglicht wird.

Ein nahezu wartungsfreier Betrieb der Wärmerückgewinnungsanlage ist möglich. Insbesondere ist -im Gegensatz zu klassischen Filtersystemen -ein nahezu wartungsfreier Betrieb der Abscheideeinheit (=Zyklonabscheider) möglich. Zudem gelangen Papierfasern nicht in die Atmosphäre.

Vorteilhafte Ausführungen des Verfahrens werden in den Unteransprüchen beschrieben.

So kann beispielsweise vorgesehen sein, dass es sich bei der heißen Prozessabluft um die Abluft von zumindest einer, bevorzugt zwei Heißlufttrockenhauben handelt. Insbesondere kann vorgesehen sein, dass es sich bei der Heißlufttrockenhaube um die Trockenhaube eines Dampfzylinders, insbesondere eines Yankeezylinders handelt.

Diese Prozessabluft kann eine Temperatur von üblicherweise mehr als 100°C, vorzugsweise mehr als 150°C, besonders bevorzugt mehr als 200°C, ganz besonders bevorzugt mehr als 300°C aufweisen, was eine Nutzung der darin enthaltenen Wärmeenergie vorteilhaft macht.

Um eine weitgehende Nutzung der in der Prozessabluft enthaltenen Wärmeenergie zu gewährleisten, kann vorteilhafterweise vorgesehen sein, dass die Prozessabluft nacheinander mehreren, insbesondere drei Wärmerückgewinnungsstufen zugeführt wird.

Weiterhin kann in einer vorteilhaften Ausführung auch vorgesehen sein, dass die Prozessabluft nach dem Durchlaufen einer oder mehrerer Wärmerückgewinnungsstufen in die Atmosphäre abgegeben wird. Eine derart behandelte Prozessabluft kann üblicherweise problemlos in die Atmosphäre abgegeben werden, da sie nicht merklich durch Partikel belastet ist, und eine Temperatur aufweist, die sich nicht mehr sehr stark von der Umgebungstemperatur unterscheidet.

In einer weiteren vorteilhaften Ausführung der Verfahrens handelt es sich bei den mitgeführten Partikeln um Papierfasern, die eine Dichte zwischen 80 kg/m³ und 120 kg/m³, insbesondere zwischen 90 kg/m³ und 110 kg/m³aufweisen.

Die Verteilung Partikelgrößen, die in vorteilhaften Anwendungen des Verfahrens in der Prozessabluft vorzufinden ist, kann dergestalt aussehen, dass Partikel aus dem Größenbereich 19µm - 100µm zwischen 32% und 48% der Partikel ausmachen, zwischen 100µm - 300µm zwischen 24% und 36%, und Partikel größer als 300 µm zwischen 24% und 36% der Partikel ausmachen. Bei speziellen Anwendungen können jedoch auch Abweichungen von diesen Verteilungen auftreten. Insbesondere kann es sich vorteilhafterweise bei den mitgeführten Partikeln um Papierfasern handeln, die eine Größe von mehr als 19 µm aufweisen.

In einer weiteren, überaus vorteilhaften Ausführung des Verfahrens kann vorgesehen sein, dass die mittels des zumindest einen Zyklonabscheiders ausgetragenen Partikel zumindest teilweise einer wasserführenden Vorrichtung, insbesondere einem Abwasserkanal oder einer Abwasserleitung zugeführt werden. Üblicherweise werden beim Einsatz von Zyklonabscheidern z.B. in Mühlen oder Sägewerken die abgeschiedenen Partikel in Sammelbehältern unterhalb des Zyklonabscheiders gesammelt, und manuell abtransportiert. Dies ist dort relativ problemlos möglich, da die abgeschiedenen Partikel relativ kühl, das heißt weit weg von ihrem Flammpunkt sind. In dem erfindungsgemäßen Verfahren können die abgeschiedenen Partikel, insbesondere die Papierfasern, noch immer sehr hohe Temperaturen aufweisen. Im Falle von direktbefeuerten gasbeheizten Hauben können die Partikel sogar noch glühen. Dies könnte beim Austrag in einen Sammelbehälter zu Bränden führen. Durch den Austrag in Brandgefährdung weitgehend verhindert. Zudem ist diese Lösung überaus wartungsfreundlich.

Die Einleitung in einen Abwasserkanal ist in einer Anlage zur Herstellung einer Papierbahn auch insofern unkritisch, da die dort auftretenden Abwässer ohnehin eine signifikante Fracht an Fasermaterial aufweisen. Die entsprechenden Behandlungsvorrichtungen von faserbeladenem Abwasser, speziell die geeigneten Kläranlagen sind also ohnehin vorhanden.

Hinsichtlich der Vorrichtung wird die Aufgabe vollständig gelöst durch eine Vorrichtung zur Wärmerückgewinnung aus heißer Prozessabluft einer Anlage zur Herstellung einer Faserstoffbahn, insbesondere einer Tissue-Bahn, umfassend zumindest eine erste Wärmerückgewinnungsstufe. Die Vorrichtung umfasst erfindungsgemäß zumindest einen Zyklonabscheider, welcher in Richtung des Stroms der Prozessabluft vor der zumindest einen Wärmerückgewinnungsstufe angeordnet ist.

Vorteilhafte Ausführungen der Vorrichtung sind wieder in den Unteransprüchen beschrieben.

So kann vorteilhafterweise vorgesehen sein, dass die Vorrichtung mehrere Wärmerückgewinnungsstufen, vorzugsweise drei Wärmerückgewinnungsstufen aufweist, wobei die mehreren Wärmerückgewinnungsstufen insbesondere in Richtung des Stroms der Prozessabluft hintereinander angeordnet sind.

Ebenso kann vorteilhafterweise vorgesehen sein, dass bei zumindest einer Wärmerückgewinnungsstufe, insbesondere bei allen Wärmerückgewinnungsstufen ein Bypass vorgesehen ist. Mittels eines solchen Bypasses ist es möglich, die Prozessabluft an einer oder mehreren Wärmerückgewinnungsstufen vorbei zu leiten. So kann beispielsweise auch nur ein Teil der vorhandenen Wärmerückgewinnungsstufen weiter betrieben werden, ohne dass hierfür bauliche Änderungen notwendig sind.

In weiteren vorteilhaften Ausführungen der Erfindung können auch mehr als ein Zyklonabscheider, insbesondere zwei, drei, vier oder mehr Zyklonabscheider vorgesehen sein.

Vorteilhafterweise kann der zumindest eine Zyklonabscheider derart ausgestaltet sein, dass Papierfasern mit einer Dichte zwischen 80 kg/m³ und 120 kg/m³ abgeschieden werden können.

In einer besonders vorteilhaften Ausführung der Vorrichtung können Mittel vorgesehen sein, um ausgetragene Partikel vom Zyklonabscheider zu einer wasserführenden Vorrichtung, insbesondere einem Abwasserkanal oder einer Abwasserleitung zu transportieren. Diese Mittel können insbesondere eine Rohrleitung umfassen oder daraus bestehen. Weiterhin kann vorteilhafterweise vorgesehen sein, dass diese Mittel mit Spülvorrichtungen ausgestattet sind. Dadurch können die ausgetragenen Partikel beispielsweise durch Spülung mit Wasser zuverlässig in einen Abwasserkanal transportiert werden und das Risiko einer Verschmutzung der Rohrleitung wird reduziert.

Eine weitere erfindungsgemäße Vorrichtung zur Wärmerückgewinnung aus heißer Prozessabluft einer Anlage zur Herstellung einer Faserstoffbahn, insbesondere einer Tissue-Bahn ist dadurch gekennzeichnet, dass die Prozessabluft vor der ersten Wärmerückgewinnungsstufe mittels eines Zyklonabscheiders zumindest teilweise von mitgeführten Partikeln, insbesondere Papierfasern, gereinigt wird.

Hinsichtlich der Anlage wird die Aufgabe gelöst durch eine Anlage zur Herstellung einer Faserstoffbahn, insbesondere einer Tissue-Bahn, welche zumindest eine erfindungsgemäße Vorrichtung zur Wärmerückgewinnung umfasst.

Im Folgenden wird die Erfindung anhand schematischer, nicht maßstabgetreuer Abbildungen weiter erläutert.
- Figur 1: zeigt einen Ausschnitt aus einer erfindungsgemäßen Anlage

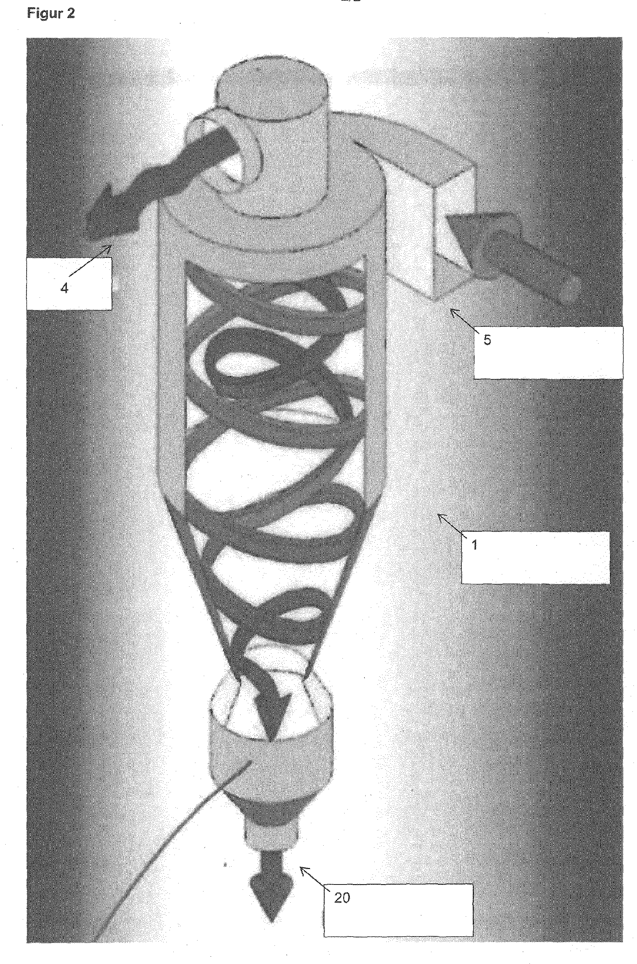

- Figur 2: zeigt einen möglichen Zyklonabscheider für eine erfindungsgemäße Vorrichtung.

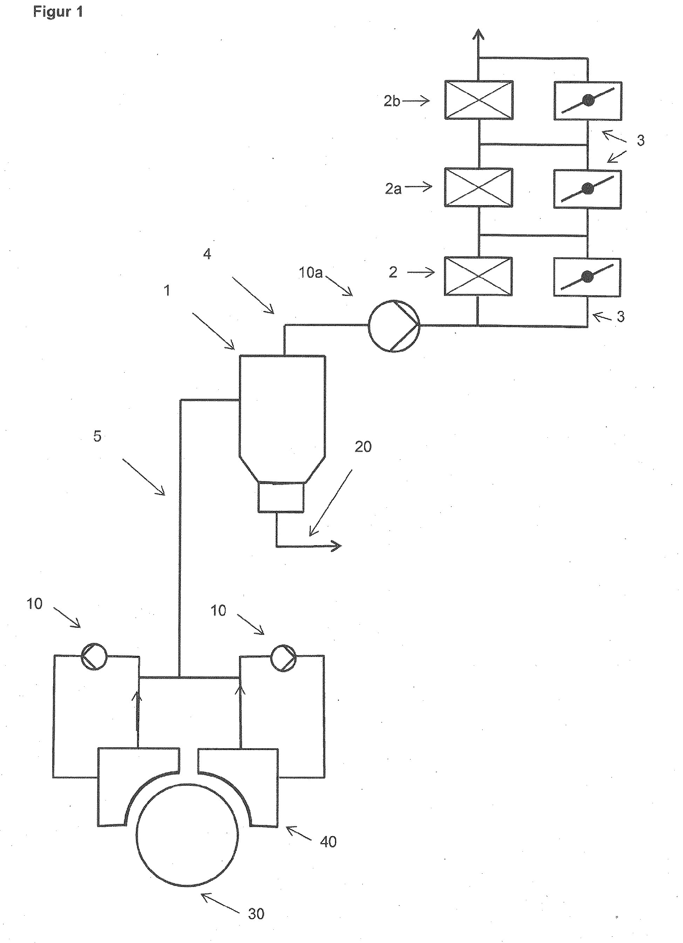

In Figur 1 wird schematisch ein Ausschnitt aus einer beispielhaften Anlage zur Herstellung einer Faserstoffbahn, speziell einer Tissuebahn gemäß der Erfindung gezeigt. Ein Dampfzylinder 30, hier als Yankeezylinder 30 ausgeführt, ist mit einer Heißlufttrockenhaube 40 versehen. Die hier gezeigte Ausführung als zweigeteilte Heißlufttrockenhaube 40 ist häufig, jedoch sind auch andere Ausführungen möglich. Ein Teil der in der Heißlufttrockenhaube 40 verwendeten Luft wird als Prozessabluft über eine Zuleitung 5 einem Zyklonabscheider 1 zugeführt. Diese Prozessabluft ist heiß, das heißt, sie hat eine Temperatur von üblicherweise mehr als 100°C, vorzugsweise mehr als 150°C, besonders bevorzugt mehr als 200°C.

In Figur 1 ist eine Vorrichtung zur Wärmerückgewinnung gezeigt, die einen Zyklonabscheider 1 aufweist. Je nach Einsatzfall kann es aber vorteilhaft sein, mehrere, insbesondere 2, 3 oder 4 Zyklonabscheider vorzusehen.

Dort wird sie ganz oder teilweise von mitgeführten Partikeln, insbesondere Papierfasern, gereinigt. Dieser Partikel können an eine Austragsstelle 20 aus dem Zyklonabscheider 1 abgeführt, und der Weiterverwendung oder Entsorgung zugeführt werden. Während hierzu häufig die an der Austragstelle 20 ausgetragenen Partikel in einem Behälter gesammelt werden, kann dies insbesondere in Anlagen, bei denen eine Heißlufttrockenhaube 40 als direktbefeuerte, gasbeheizte Hauben 40 ausgeführt ist, zu Problemen führen. Die ausgetragenen die Partikel sind hier sehr heiß und können sogar noch glühen. Dies könnte beim Austrag in einen Sammelbehälter zu Bränden führen. Daher kann vorgesehen sein, die Partikel in einen Abwasserkanal oder eine Abwasserleitung zu transportieren, ohne sie vorher zwischen zu lagern. Durch diese Art Austrag wird die Brandgefährdung weitgehend verhindert. Zudem ist diese Lösung überaus wartungsfreundlich.

Die Einleitung in einen Abwasserkanal ist in einer Anlage zur Herstellung einer Papierbahn auch insofern unkritisch, da die dort auftretenden Abwässer ohnehin eine signifikante Fracht an Fasermaterial aufweisen. Die entsprechenden Behandlungsvorrichtungen von faserbeladenem Abwasser, speziell die geeigneten Kläranlagen sind also ohnehin vorhanden.

Die mittels zumindest eines Zyklonabscheiders 1 gereinigte Prozessabluft wird über eine Ausleitung 4, welche beispielsweise auch eine Pumpe 10a umfassen kann, aus dem Zyklonabscheider abgeführt, und einer ersten Wärmerückgewinnungsstufe 2 zugeführt. Hinter der ersten Wärmerückgewinnungsstufe 2 können noch weitere Wärmerückgewinnungsstufen 2a, 2b angeordnet sein. Dies ist vorteilhaft, wenn die Prozessabluft nach der ersten Wärmerückgewinnungsstufe 2 noch eine ausreichend hohe Temperatur aufweist.

Nach Durchlaufen der Wärmerückgewinnungsstufen 2, 2a, 2b kann die Abluft häufig problemlos in die Atmosphäre abgegeben werden.

Bei der Anlage in Figur 1 ist bei allen Wärmerückgewinnungsstufen 2, 2a, 2b jeweils ein Bypass 3 vorgesehen. Über einen solchen Bypass 3 kann die Abluft an der Wärmerückgewinnungsstufe 2, 2a, 2b vorbei geleitet werden. Dies ist eine vorteilhafte Einrichtung, da beispielsweise im Fall, dass eine Wärmerückgewinnungsstufe 2, 2a, 2b gewartet werden muss, die anderen weiter betrieben werden können.

### Referenzzeichenliste

- 1: Zyklonabscheider
- 2, 2a, 2b: Wärmerückgewinnungsstufe
- 3: Bypass
- 4: Ausleitung Zyklonabscheider
- 5: Zuleitung Zyklonabscheider
- 10,10a: Pumpe
- 20: Faseraustrag
- 30: Yankeezylinder
- 40: Heißlufttrockenhaube

## Patentansprüche

1. Verfahren zur Wärmerückgewinnung aus heißer Prozessabluft einer Anlage zur Herstellung einer Faserstoffbahn, insbesondere einer Tissue-Bahn, wobei die Prozessabluft zumindest einer ersten Wärmerückgewinnungsstufe, bevorzugt mehreren Wärmerückgewinnungs-stufen zugeführt wird, **dadurch gekennzeichnet, dass** die Prozessabluft mittels zumindest eines Zyklonabscheiders zumindest teilweise von mitgeführten Partikeln, insbesondere Papierfasern, gereinigt wird, und danach der zumindest einen ersten Wärmerückgewinnungsstufe, bevorzugt mehreren Wärmerückgewinnungsstufen zugeführt wird.

2. Verfahren gemäß Anspruch 2, **dadurch gekennzeichnet, dass** es sich bei der heißen Prozessabluft um die Abluft von zumindest einer, bevorzugt zwei Heißlufttrockenhauben handelt.

3. Verfahren gemäß Anspruch 1 oder 2, **dadurch gekennzeichnet, dass** es sich bei der Heißlufttrockenhaube um die Trockenhaube eines Dampfzylinders, insbesondere eines Yankeezylinders handelt.

4. Verfahren gemäß einem der vorherigen Ansprüche, **dadurch gekennzeichnet, dass** die Prozessabluft nacheinander mehreren, insbesondere drei Wärmerückgewinnungsstufen zugeführt wird.

5. Verfahren gemäß einem der vorherigen Ansprüche, **dadurch gekennzeichnet, dass** die Prozessabluft nach dem Durchlaufen einer oder mehrerer Wärmerückgewinnungsstufen in die Atmosphäre abgegeben wird.

6. Verfahren gemäß einem der vorherigen Ansprüche, **dadurch gekennzeichnet, dass** es sich bei den mitgeführten Partikeln um Papierfasern handelt, die eine Dichte zwischen 80 kg/m³ und 120 kg/m³ aufweisen.

7. Verfahren gemäß einem der vorherigen Ansprüche, **dadurch gekennzeichnet, dass** zwischen 24% und 36% der mitgeführten Partikel eine Länge von mehr als 300 µm aufweisen.

8. Verfahren gemäß einem der vorherigen Ansprüche, **dadurch gekennzeichnet, dass** die mittels des zumindest einen Zyklonabscheiders ausgetragenen Partikel zumindest teilweise einer wasserführenden Vorrichtung, insbesondere einem Abwasserkanal oder einer Abwasserleitung zugeführt werden.

9. Vorrichtung zur Wärmerückgewinnung aus heißer Prozessabluft einer Anlage zur Herstellung einer Faserstoffbahn, insbesondere einer Tissue-Bahn, umfassend zumindest eine erste Wärmerückgewinnungsstufe **dadurch gekennzeichnet, dass** die Vorrichtung zumindest einen Zyklonabscheider umfasst, welcher in Richtung des Stroms der Prozessabluft vor der zumindest einen Wärmerückgewinnungsstufe angeordnet ist.

10. Vorrichtung gemäß Anspruch 9, **dadurch gekennzeichnet, dass** die Vorrichtung mehrere Wärmerückgewinnungsstufen, vorzugsweise drei Wärmerückgewinnungsstufen aufweist, wobei die mehreren Wärmerückgewinnungsstufen insbesondere in Richtung des Stroms der Prozessabluft hintereinander angeordnet sind.

11. Vorrichtung nach Anspruch 9 oder 10, **dadurch gekennzeichnet, dass** bei zumindest einer Wärmerückgewinnungsstufe, insbesondere bei allen Wärmerückgewinnungsstufen ein Bypass vorgesehen ist.

12. Vorrichtung gemäß einem der Ansprüche 9 bis 11, **dadurch gekennzeichnet, dass** Mittel vorgesehen sind, um ausgetragene Partikel vom Zyklonabscheider zu einer wasserführenden Vorrichtung, insbesondere einem Abwasserkanal oder einer Abwasserleitung zu transportieren.

13. Anlage zur Herstellung einer Faserstoffbahn, insbesondere einer Tissue-Bahn, **dadurch gekennzeichnet, dass** die Anlage zumindest eine Vorrichtung zur Wärmerückgewinnung gemäß einem der Ansprüche 9 bis 12 umfasst.

## Claims

1. Method for heat recovery from hot process exhaust air of a plant for the production of a fibrous material web, in particular a tissue web, wherein the process exhaust air is fed to at least one first heat recovery stage, preferably a plurality of heat recovery stages, **characterized in that** particles, in particular paper fibres carried along with the exhaust air are at least partially removed from the process exhaust air by means of at least one cyclone separator before the process exhaust air is fed to the at least one first heat recovery stage.

2. Method according to claim 2, **characterized in that** the hot process exhaust air is the exhaust air of at least one, preferably two, hot-air drying hoods.

3. Method according to Claim 1 or 2, **characterized in that** the hot-air drying hood is the drying hood of a steam cylinder, in particular of a Yankee cylinder.

4. Method according to one of the previous claims, **characterized in that** the process exhaust air is supplied successively to several, in particular three heat recovery stages.

5. Method according to one of the previous claims, **characterized in that** the process exhaust air is released into the atmosphere after passing through one or more heat recovery stages.

6. Method according to one of the previous claims, **characterized in that** the particles carried along with the exhaust air are paper fibres having a density between 80 kg/m³ and 120 kg/m³.

7. Method according to one of the previous claims, **characterized in that** between 24% and 36% of the particles carried along have a length of more than 300 µm.

8. Method according to one of the previous claims, **characterized in that** the particles discharged by means of the at least one cyclone separator are fed at least partly to a water-bearing device, in particular to a sewer or a sewage pipe.

9. Device for heat recovery from hot process exhaust air of a plant for the production of a fibrous material web, in particular a tissue web, comprising at least one first heat recovery stage, **characterized in that** the device comprises at least one cyclone separator which is arranged in the direction of the flow of the process exhaust air before the at least one heat recovery stage.

10. Device according to claim 9, **characterized in that** the device comprises several heat recovery stages, preferably three heat recovery stages, the several heat recovery stages being arranged one after the other, in particular in the direction of the flow of the process exhaust air.

11. Device according to one of the claims 9 or 10, **characterized in that** a bypass is provided for at least one heat recovery stage, in particular for all heat recovery stages.

12. Device in according to one of the claims 9 to 11, **characterized in that** means are provided for transporting discharged particles from the cyclone separator to a water carrying device, in particular a sewer or a sewage pipe.

13. Plant for the production of a fibrous web, in particular a tissue web, **characterized in that** the plant comprises at least one device for heat recovery in accordance with one of Claims 9 to 12.

## Revendications

1. Procédé de récupération de chaleur à partir d'air vicié de processus d'une installation de fabrication d'une bande de matière fibreuses, en particulier d'une bande de papier tissu, l'air vicié de processus étant acheminé à au moins un premier étage de récupération de chaleur, de préférence à plusieurs étages de récupération de chaleur, **caractérisé en ce que** l'air vicié de processus est débarrassé au moyen d'au moins un séparateur à cyclone au moins en partie des particules entraînées, en particulier de fibres de papier, puis est acheminé à l'au moins un premier étage de récupération de chaleur, de préférence à plusieurs étages de récupération de chaleur.

2. Procédé selon la revendication 2, **caractérisé en ce que** l'air vicié de processus chaud est l'air vicié provenant d'au moins une, de préférence de deux, hottes de séchage à l'air chaud.

3. Procédé selon la revendication 1 ou 2, **caractérisé en ce que** la hotte de séchage à l'air chaud est une hotte de séchage d'un cylindre à vapeur, en particulier d'un cylindre Yankee.

4. Procédé selon l'une quelconque des revendications précédentes, **caractérisé en ce que** l'air vicié de processus est acheminé successivement à plusieurs, en particulier à trois étages de récupération de chaleur.

5. Procédé selon l'une quelconque des revendications précédentes, **caractérisé en ce que** l'air vicié de processus est évacué dans l'atmosphère après être passé à travers un ou plusieurs étages de récupération de chaleur.

6. Procédé selon l'une quelconque des revendications précédentes, **caractérisé en ce que** les particules entraînées sont des fibres de papier qui présentent une densité comprise entre 80 kg/m³ et 120 kg/m³.

7. Procédé selon l'une quelconque des revendications précédentes, **caractérisé en ce qu'**entre 24 % et 36 % des particules entraînées présentent une longueur supérieure à 300 µm.

8. Procédé selon l'une quelconque des revendications précédentes, **caractérisé en ce que** les particules évacuées au moyen de l'au moins un séparateur à cyclone sont acheminées au moins en partie à un dispositif de guidage d'eau, en particulier un canal d'eaux usées ou à une conduite d'eaux usées.

9. Dispositif de récupération de chaleur à partir de l'air vicié de processus d'une installation de fabrication d'une bande fibreuse, en particulier d'une bande de papier tissu, comprenant au moins un premier étage de récupération de chaleur, **caractérisé en ce que** le dispositif comprend au moins un séparateur à cyclone qui est disposé dans la direction de l'écoulement de l'air vicié de processus avant l'au moins un étage de récupération de chaleur.

10. Dispositif selon la revendication 9, **caractérisé en ce que** le dispositif présente plusieurs étages de récupération de chaleur, de préférence trois étages de récupération de chaleur, la pluralité d'étages de récupération de chaleur étant disposés les uns derrière les autres notamment dans la direction de l'écoulement de l'air vicié de processus.

11. Dispositif selon la revendication 9 ou 10, **caractérisé en ce que** dans le cas d'au moins un étage de récupération de chaleur, en particulier dans le cas de tous les étages de récupération de chaleur, il est prévu une dérivation.

12. Dispositif selon l'une quelconque des revendications 9 à 11, **caractérisé en ce que** des moyens sont prévus pour transporter des particules évacuées depuis le séparateur à cyclone jusqu'à un dispositif de guidage d'eau, en particulier un canal d'eau usée ou une conduite d'eau usée.

13. Installation de fabrication d'une bande de matières fibreuses en particulier d'une bande de papier tissu, **caractérisée en ce que** l'installation comprend au moins un dispositif de récupération de chaleur selon l'une quelconque des revendications 9 à 12.
